(19) Europäisches Patentamt
European Patent Office
Office européen des brevets

(11) **EP 4 123 506 B1**

(12) **EUROPÄISCHE PATENTSCHRIFT**

(45) Veröffentlichungstag und Bekanntmachung des Hinweises auf die Patenterteilung:
**03.09.2025  Patentblatt 2025/36**

(21) Anmeldenummer: **22185470.6**

(22) Anmeldetag: **18.07.2022**

(51) Internationale Patentklassifikation (IPC):
**G06V 10/82** *(2022.01)*   **G06V 10/25** *(2022.01)*

(52) Gemeinsame Patentklassifikation (CPC):
**G06V 10/82; G06F 18/254; G06N 3/0455; G06N 3/0895; G06N 3/094; G06T 7/0004;** G06T 2207/20081; G06T 2207/20084; G06V 2201/06

(54) **VERFAHREN UND VORRICHTUNG ZUM ANALYSIEREN EINES PRODUKTS, TRAININGSVERFAHREN, SYSTEM, COMPUTERPROGRAMM UND COMPUTERLESBARES SPEICHERMEDIUM**

METHOD AND DEVICE FOR ANALYZING A PRODUCT, TRAINING METHOD, SYSTEM, COMPUTER PROGRAM, AND COMPUTER READABLE STORAGE MEDIUM

PROCÉDÉ ET DISPOSITIF D'ANALYSE D'UN PRODUIT, PROCÉDÉ D'APPRENTISSAGE, SYSTÈME, PROGRAMME INFORMATIQUE ET SUPPORT D'ENREGISTREMENT LISIBLE PAR ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2021  DE 102021118711**

(43) Veröffentlichungstag der Anmeldung:
**25.01.2023  Patentblatt 2023/04**

(73) Patentinhaber: **Fsas Technologies GmbH 80807 München (DE)**

(72) Erfinder:
- **Rothmund, Felix 80807 München (DE)**
- **Agarwal, Simran 80807 München (DE)**
- **Casas, Leslie 80807 München (DE)**
- **Chai, Keng 80807 München (DE)**
- **Bößl, Markus 80807 München (DE)**
- **Mahajan, Shweta 80807 München (DE)**
- **Pirnay, Jonathan 80807 München (DE)**
- **Riedisser, Jochen 80807 München (DE)**

(74) Vertreter: **Epping - Hermann - Fischer Patentanwaltsgesellschaft mbH Schloßschmidstraße 5 80639 München (DE)**

(56) Entgegenhaltungen:
**CN-A- 108 229 561    US-A1- 2020 364 842**

- **ZAVRTANIK VITJAN ET AL: "Reconstruction by inpainting for visual anomaly detection", PATTERN RECOGNITION, ELSEVIER, GB, vol. 112, 17 October 2020 (2020-10-17), XP086473116, ISSN: 0031-3203, [retrieved on 20201017], DOI: 10.1016/J.PATCOG.2020.107706**
- **JONATHAN PIRNAY ET AL: "Inpainting Transformer for Anomaly Detection", ARXIV.ORG, CORNELL UNIVERSITY LIBRARY, 201 OLIN LIBRARY CORNELL UNIVERSITY ITHACA, NY 14853, 28 April 2021 (2021-04-28), XP081945412**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren sowie eine Vorrichtung zum Analysieren eines Medizinprodukts. Die Erfindung betrifft ferner ein Verfahren zum Trainieren einer Vorrichtung zum Analysieren eines Medizinprodukts. Die Erfindung betrifft ferner ein System umfassend die oben genannte Vorrichtung und eine Inspektionsvorrichtung. Die Erfindung betrifft ferner ein entsprechendes Computerprogramm und ein entsprechendes computerlesbares Speichermedium.

Medizinprodukte, wie beispielsweise flüssige Arzneimittel, Tabletten oder Ampullen bzw. sonstige Fläschchen mit oder für Flüssigkeiten wie beispielsweise Flüssigimpfstoffen oder sonstige Arzneimittel oder in der Medizin gebräuchlicher Stoffe haben hohe Qualitätserfordernisse bei der Produktion. So ist es unter anderem von hoher Wichtigkeit sicherzustellen, dass derartige Medizinprodukte nach der Produktion weder mechanische Defekte aufweisen, noch verunreinigt sind oder sonstige sichtbare Beeinträchtigungen aufweisen, die zu einer Wirkungslosigkeit oder zu einer Gesundheitsgefährdung durch derartige Produkte führen könnten. Dies gilt sowohl für die Arzneimittel selbst, als auch für deren Verpackungen. Analog kann dies auch bei sonstigen Produkten gelten.

Um diese Qualitätsanforderungen zu garantieren werden in der Produktion Arbeiter eingesetzt, die die Arzneimittel, Medikamente, Ampullen und Fläschchen oder sonstige Verpackungen und Produkte kontrollieren. Dies erfordert eine hohe Konzentration und ist dennoch anfällig gegenüber menschlichem Versagen.

US 2020/364842 A1 offenbart ein computerimplementiertes Verfahren zur Verarbeitung von Bildern von Materialoberflächen, um Defekte auf der abgebildeten Materialoberfläche zu identifizieren, wobei das Verfahren das Trainieren eines neuronalen Netzes zur Erzeugung von Versionen mit reduzierten Defekten von Trainingsbildern von Materialoberflächen, das Erfassen eines Bildes einer betreffenden Materialoberfläche, die Eingabe des erfassten Bildes in das neuronale Netz zur Erzeugung einer Version des erfassten Bildes mit reduzierten Defekten und den Vergleich der Version des erfassten Bildes mit reduzierten Defekten mit dem erfassten Bild zur Identifizierung von Unterschieden umfasst. Defekte auf der betreffenden Materialoberfläche an den Stellen der identifizierten Unterschiede sind identifizierbar.

CN 108 229 561 A offenbart ein Verfahren zur Erkennung von Partikelproduktdefekten auf der Basis von Deep Learning. Das Verfahren umfasst die folgenden Schritte: Erhalten eines Bildes eines Zielprodukts; Entfernen von Hintergrundinformationen in dem Bild; Klassifizierung und Kennzeichnung aller Bilder; Aufbau einer neuronalen Netzwerkstruktur und Durchführung eines Trainings der Gewichtung des neuronalen Netzwerks unter Verwendung der markierten Bilddaten; basierend auf dem trainierten Modell, Verwendung des Bildes, um das Produkt zu erkennen.

Die Publikation "Reconstruction by inpainting for visual anomaly detection" von ZAVRTANIK VITJAN et al. (DOI: 10.1016/J.PATCOG.2020.107706) untersucht die Erkennung von Anomalien als ein selbstüberwachtes Problem der Rekonstruktion durch Einfärben. Hierfür werden nach dem Zufallsprinzip partielle Bildregionen entfernt und das Bild wird aus partiellen Inpaintings rekonstruiert, wodurch die Nachteile von Auto-Enocoding-Methoden behoben werden sollen. Die Publikation ""Inpainting Transformer for Anomaly Detection" von JONATHAN PIRNAY et al. (XP081945412) offenbart, für die Erkennung von Anomalien durch Inpainting, das Einbeziehen von Informationen aus potenziell entfernten Regionen. Insbesondere wird die Erkennung von Anomalien als ein Patch-Inpainting-Problem dargestellt.

Eine Aufgabe der Erfindung ist es daher, eine verbesserte Möglichkeit zur Qualitätskontrolle bei der Produktion von derartigen Medizinprodukten oder anderer Produkte zu liefern. Die oben genannte Aufgabe wird mit den Verfahren und Gegenständen gemäß der unabhängigen Patentansprüche erreicht. Weitere Ausgestaltungen sind in den abhängigen Patentansprüchen sowie in den Figuren und der zugehörigen Beschreibung offenbart.

Gemäß einem ersten Aspekt der Erfindung umfasst ein Verfahren nach Anspruch 1.

Vorteilhaft bei diesem Verfahren ist es, dass ein sicheres und zuverlässiges automatisiertes Inspizieren eines Produkts ermöglicht wird. Hiermit können anstrengende Sichtungsjobs bei der Produktion derartiger Produkte ersetzt oder unterstütz werden. Außerdem wird hiermit eine sehr hohe Qualitätssicherung erreicht, da mittels der Anomalieerkennung auch Defekte als Anomalien erkannt werden, die zuvor nicht bekannt waren.

Das Bild des Produkts kann hierbei beispielsweise ein Bild eines Medizinprodukts, beispielsweise eines Arzneimittels (flüssig oder fest) sein oder eines derartigen Arzneimittels in einer Verpackung, wie beispielsweise einer Ampulle, einem Fläschchen, einer Blister-Verpackung oder sonstigem. Alternativ kann das Bild des Produkts ein Bild eines beliebigen anderen Produkts sein. Insbesondere kann das Bild ein Produkt, eine Verpackung eines Produkts, oder eine Kombination aus Produkt und Verpackung zeigen. Im Folgenden wird die Erfindung im Wesentlichen mit Bezug auf ein Medizinprodukt beschrieben. Allerdings können alle Ausgestaltungen und Vorteile ebenso auf ein beliebiges anderes Produkt angewendet werden.

Bei der Anomalieerkennung wird festgestellt, ob an dem Medizinprodukt, wie es in dem empfangenen Bild abgebildet ist, sichtbare Abweichungen zu einem fehlerfreien Produkt vorliegen. Bei derartigen Anomalien kann es sich beispielsweise um Defekte an einer Verpackung oder einem Arzneimittel innerhalb einer Verpackung oder optische Abweichungen, wie beispielsweise Spiegelungen, Schatten, oder sonstiges handeln. Bei der Anomalieerkennung wird festgestellt, dass eine solche Abweichung zwischen dem abgebildeten Medizinprodukt und einem anomaliefreien Medizinprodukt vorliegt.

Der Inpainting Autoencoder verwendet hierbei die Bildbearbeitungsmethode des Inpaintings, mit der anhand des wenigstens einen ersten neuronalen Netzes Bildteile rekonstruiert werden können. Da das wenigstens eine erste neuronale Netz mittels dem ersten Satz von Trainingsdaten trainiert ist, welcher eine Vielzahl von Trainingsbildern umfasst, die jeweils ein fehlerfreies Medizinprodukt zeigen, das heißt jeweils ein Medizinprodukt, bei dem keine Anomalien zu erkennen sind, kann der Inpainting Autoencoder das Medizinprodukt, wie es im empfangenen Bild abgebildet ist, so rekonstruieren, wie es in einem anomaliefreien Zustand aussehen müsste.

Ein Vorteil hierbei ist es, dass es hierfür unerheblich ist, in welcher Position oder Ausrichtung das Medizinprodukt in dem empfangenen Bild dargestellt ist. Der Inpainting Autoencoder rekonstruiert unabhängig von der Position oder Ausrichtung des Medizinprodukts ein anomaliefreies Pendant des empfangenen Bildes mit gleicher Position bzw. Ausrichtung. Auf diese Weise wird ein anomaliefreies Pendant generiert, welches mit dem empfangenen Bild verglichen werden kann.

Ein Vorteil der Verwendung des binären Klassifizierers ist es, dass dieser feststellen kann, wenn bei der Anomalieerkennung eine Abweichung zwischen dem Medizinprodukt im empfangenen Bild und dem mit dem Inpainting Autoencoder rekonstruierten anomaliefreien Pendant zum empfangenen Bild festgestellt wurde, ob die erkannte Anomalie als Defekt zu werten ist, oder nicht. Als Defekt kann hierbei eine Anomalie gewertet werden, die eine Qualität des Medizinprodukts negativ beeinflussen kann, beispielsweise eine Beschädigung oder fehlerhafter Verschluss der Verpackung, eine Verunreinigung des Arzneimittels, ein zu geringer oder zu großer Füllstand, etc. Als Anomalie, bei der es sich nicht um einen Defekt handelt, kann beispielsweise eine Anomalie gewertet werden, die keinen negativen Einfluss auf die Qualität des Medizinprodukts hat, beispielsweise eine Spiegelung oder ein Schatten in dem empfangenen Bild.

Der binäre Klassifizierer kann beispielsweise auf einem zweiten neuronalen Netz basieren, wie es weiter unten beschrieben ist, oder auf anderen Verfahren zur Interpretation des Differenzbildes, welches mittels dem Inpainting Autoencoder erstellt wurde. So können für den binären Klassifizierer beispielsweise auch regelbasierte Verfahren verwendet werden, anhand derer bestimmt wird, ob eine Anomalie als Defekt zu erkennen ist oder nicht.

Auf diese Weise ist es möglich, mittels der Anomalieerkennung und dem nachgeschalteten binären Klassifizierer, festzustellen, ob eine Anomalie vorliegt und ob diese als Defekt zu werten ist, oder nicht. Vorteilhaft hierbei ist ferner, dass das wenigstens eine erste neuronale Netz mit Trainingsbildern trainiert werden kann, die keine Defekte zeigen, sondern lediglich defektfreie bzw. mit Anomalien, die nicht als Defekte zu werten sind. Defektbehaftete Trainingsbilder sind bei der Produktion von Medizinprodukten sehr selten, da bereits die Produktion der Medizinprodukte auf sehr hohen Qualitätsstandards basiert. Defektfreie Trainingsbilder können jedoch in großer Zahl erhoben werden. Daher ist es hier vorteilhaft, das wenigstens eine erste neuronale Netz basierend auf defektfreien Trainingsbildern zu trainieren. Beispielsweise wird das wenigstens eine erste neuronale Netz ausschließlich basierend auf defektfreien Trainingsbildern trainiert.

Der Defekterkenner ist beispielsweise dazu eingerichtet, einen Defekttyp und/oder einen Ort eines Defekts und/oder eine Defektwahrscheinlichkeit an dem empfangenen Bild des Medizinprodukts zu erkennen. Hierfür ist das wenigstens eine dritte neuronale Netz basierend auf Trainingsbildern trainiert, die entsprechende fehlerhafte Medizinprodukte zeigen. So ist es dem Defekterkenner möglich, Defekte zu erkennen, die ihm aus den Trainingsdaten bekannt sind. Hierfür wird ein Objekterkennungsverfahren, wie beispielsweise ein You-only-look-once-Modell (YOLO-Modell), verwendet.

Für das Auswerten des Ergebnisses der Analyse des empfangenen Bildes werden beispielsweise prozentuale Gewichtungen der Ergebnisse der Anomalieerkennung, des binären Klassifizierers und der Defekterkennung verwendet. Mit anderen Worten, es wird den einzelnen Analyseschritten jeweils eine Gewichtung verliehen, mittels derer eine bestimmte Wahrscheinlichkeit, dass es sich um einen tatsächlichen Defekt handelt, in ein Endergebnis der Analyse einfließt. Mit der Kombination und Gewichtung dieser Analyseschritte ist es möglich, zuverlässige und genaue Ergebnisse bei der maschinellen Qualitätskontrolle von Medizinprodukten zu erzielen, selbst wenn zu Trainingszwecken der verschiedenen neuronalen Netze, im Vergleich zu Trainingsdaten die keinen Defekt zeigen, nur eine sehr geringe Anzahl von Trainingsdaten vorliegen, die tatsächlich defektbehaftete und auszusortierende Medizinprodukte zeigen.

Gemäß wenigstens einer Ausgestaltung wird für das Durchführen der Anomalieerkennung das empfangene Bild in wenigstens zwei Teilbilder unterteilt. Die Anomalieerkennung wird an den einzelnen Teilbildern durchgeführt und der binäre Klassifizierer wird auf die Ergebnisse der Anomalieerkennung der einzelnen Teilbilder angewandt.

Vorteilhaft hierbei ist es, dass eine Verarbeitungszeit bei der Anomalieerkennung und dem Anwenden des binären Klassifizierers durch mögliche Parallelisierung reduziert werden kann. Hierdurch ist eine günstigere und praktikablere Analyse für Realtime-Anwendungen möglich, beispielsweise wenn hohe Analyseraten erzielt werden sollen. So können beispielsweise 100 oder mehr Medizinprodukte pro Minute analysiert werden, was in modernen Produktionsstrecken vorteilhaft ist.

Gemäß wenigstens einer Ausgestaltung wertet bei dem Bestimmen, mittels des binären Klassifizierers, anhand eines Ergebnisses der Anomalieerkennung ob ein Defekt vorliegt oder nicht, der binäre Klassifizierer anhand eines Rekonstruktionsfehlers einer mittels dem Inpainting Autoencoder rekonstruierten Version des empfangenen Bildes aus, ob das in dem empfangenen Bild dargestellte Medizinprodukt fehlerhaft oder fehlerfrei zu bewerten ist.

Dies ermöglicht ein einfaches Erstellen des binären Klassifizierers, sowie dass eine Verarbeitungszeit und benötigte Rechenleistung für den binären Klassifizierer gering gehalten werden können. Ferner unterstützt der binäre Klassifizierer vorteilhafterweise die Auswertung mittels des Inpainting Autoencoders zur Bestimmung von Defekten in dem empfangenen Bild.

Gemäß wenigstens einer Ausgestaltung umfasst der binäre Klassifizierer wenigstens ein zweites neuronales Netz, welches basierend auf einem zweiten Satz von Trainingsbildern trainiert ist. Der zweite Satz von Trainingsbildern umfasst Ergebnisse des Inpainting Autoencoders.

Der binäre Klassifizierer umfasst in dieser Ausgestaltung wenigstens ein zweites neuronales Netz, wobei das wenigstens eine zweite neuronale Netz, verglichen mit dem wenigstens einen ersten neuronalen Netz, ein kleineres neuronales Netz ist. Das wenigstens eine zweite neuronale Netz ist basierend auf einem wesentlich kleineren Satz von Trainingsdaten trainiert als das wenigstens eine erste neuronale Netz.

Das wenigstens eine zweite neuronale Netz des binären Klassifizierers ist hierfür basierend auf Trainingsbildern trainiert, die Ergebnisse des Inpainting Autoencoders umfassen. Mit anderen Worten, das wenigstens eine zweite neuronale Netz ist basierend auf Trainingsbildern trainiert, die Rekonstruktionsfehler zeigen, d.h. Abweichungen zwischen einem Ursprungsbild und einem rekonstruierten Pendant. Zusätzlich oder alternativ können zum Trainieren des wenigstens einen zweiten neuronalen Netzes ausschließlich solche Ergebnisse des Inpainting Autoencoders verwendet werden, die aus Trainingsbildern gewonnen wurden, die gelabelte fehlerhafte und fehlerfreie Medizinprodukte zeigen. Gemäß wenigstens einer Ausgestaltung wird ferner eine Attention-Map des wenigstens einen zweiten neuronalen Netzes beim Anwenden des binären Klassifizierers erstellt.

Ein Vorteil hierbei ist es, dass mittels der Attention-Map, d.h. mittels der Betrachtung an welchen Stellen des empfangenen Bildes das wenigstens eine zweite neuronale Netz eine höhere Aktivität aufweist, eine Lokalisierung von erkannten Anomalien möglich ist. So ist es ferner möglich, auch je nach Lokalität erkannter Anomalien, die Bestimmung, ob es sich dabei um einen Defekt handelt oder nicht, zu beeinflussen. Beispielsweise können Anomalien in Bereichen des Medizinprodukts, in denen häufiger Spiegelungen auftreten, wie beispielsweise bei einem Fläschchen ein Bereich eines Flaschenhalses, anders bewertet werden, als Anomalien, die in Bereichen auftreten, in denen eher seltener Spiegelungen auftreten.

Gemäß einem zweiten Aspekt der Erfindung umfasst ein Verfahren zum Trainieren einer Vorrichtung zum Analysieren eines Produkts nach Anspruch 6.

Das Produkt ist beispielsweise ein Medizinprodukt. Vorteilhaft bei diesem Trainingsverfahren ist es, dass zum Trainieren des wenigstens einen ersten neuronalen Netzes, wie oben beschrieben, Trainingsdaten verwendet werden können, die auf Bildern basieren, die defektfreie Medizinprodukte zeigen. Dies ist insbesondere vorteilhaft, falls in der Produktion bereits ein hoher Qualitätsstandard eingehalten wird, sodass fehlerhafte Produkte nur in vergleichsweise sehr geringer Zahl vorliegen. Lediglich für den wenigstens einen dritten Satz von Trainingsbildern werden hier Trainingsbilder verwendet, die fehlerhafte Medizinprodukte zeigen. Da diese Trainingsdaten jedoch nur in geringer Zahl vorliegen, wird, bei der Analyse mit einem derartig trainierten System, das wenigstens eine dritte neuronale Netz durch das wenigstens eine erste neuronale Netz und den binären Klassifizierer bei der Feststellung, ob ein Medizinprodukt defektbehaftet ist oder nicht, unterstützt. Auf diese Weise kann eine so trainierte Vorrichtung mit hoher Genauigkeit und Zuverlässigkeit defekte Medizinprodukte erkennen.

Gemäß wenigstens einer Ausgestaltung umfasst das Erstellen des binären Klassifizierers:

- Erstellen eines zweiten Satzes von Trainingsbildern, wobei der zweite Satz von Trainingsbildern Ergebnisse des Inpainting Autoencoders umfasst;
- Trainieren wenigstens eines zweiten neuronalen Netzes des binären Klassifizierers basierend auf dem zweiten Satz von Trainingsbildern.

Der zweite Satz von Trainingsbildern umfasst Ergebnisse des Inpainting Autoencoders, die basierend auf Bildern von fehlerfreien und/oder fehlerbehafteten, gelabelten Medizinprodukten erstellt wurden. Da das wenigstens eine zweite neuronale Netz wesentlich kleiner als das wenigstens eine erste neuronale Netz ist, reicht zum Trainieren des wenigstens einen zweiten neuronalen Netzes eine geringere Anzahl von Trainingsbildern aus, in der sowohl Bilder von fehlerfreien als auch von fehlerbehafteten Medizinprodukten vorliegen können.

Gemäß wenigstens einer Ausgestaltung umfasst das Verfahren zum Trainieren ferner den Schritt:

- Erstellen eines weiteren dritten Satzes von Trainingsbildern, wobei der weitere dritte Satz von Trainingsbildern sowohl eine Vielzahl von Trainingsbildern umfasst, die jeweils ein fehlerhaftes Medizinprodukt zeigen, als auch eine Vielzahl von Trainingsbildern umfasst, die jeweils ein fehlerfreies Medizinprodukt zeigen, und wobei das Trainieren des wenigstens einen dritten neuronalen Netzes zusätzlich basierend auf dem weiteren dritten Satz von Trainingsbildern durchgeführt wird.

Ein Vorteil hierbei ist es, dass auf diese Weise eine Defekterkennung mittels dem Defekterkenner zuverlässiger und genauer wird.

Gemäß wenigstens einer Ausgestaltung umfasst das Verfahren zum Trainieren ferner den Schritt:

- Erstellen eines noch weiteren dritten Satzes von Trainingsbildern, wobei der noch weitere dritte Satz von Trainingsbildern eine Vielzahl von Trainingsbildern umfasst, die jeweils ein fehlerfreies Medizinprodukt zeigen, welches von dem zuvor trainierten wenigstens einen dritten neuronalen Netz als fehlerhaft erkannt wurde, und wobei das Trainieren des wenigstens einen dritten neuronalen Netzes zusätzlich basierend auf dem noch weiteren dritten Satz von Trainingsbildern durchgeführt wird.

Ein Vorteil hierbei ist es, dass auf diese Weise eine Defekterkennung mittels dem Defekterkenner nochmals zuverlässiger und genauer wird.

Gemäß wenigstens einer Ausgestaltung umfasst das Trainieren des wenigstens eines ersten neuronalen Netzes des Inpainting Autoencoders basierend auf dem ersten Satz von Trainingsbildern ferner:

- patchweise Rekonstruieren eines Trainingsbilds des ersten Satzes von Trainingsbildern;
- Hinzufügen, für eine Vielzahl von rekonstruierten Patches, eines Randbereichs aus einem entsprechenden Teil des ursprünglichen Trainingsbilds; und
- Trainieren des wenigstens einen ersten neuronalen Netzes des Inpainting Autoencoders mittels der rekonstruierten Patches des Trainingsbilds unter Berücksichtigung der hinzugefügten Randbereiche.

Dies ist vorteilhaft, da auf diese Weise Artefakte, die durch die Rekonstruktion bei einem patchweisen Rekonstruieren an den Rändern der jeweiligen Patches entstehen können und die bei dem weiteren Verarbeiten der Ergebnisse der Anomalieerkennung nachteilig sein können, verringert oder vermieden werden können. Insbesondere können solche Artefakte an den Rändern solcher Patches auftreten, was zu einem ungewollten Schachbrettmuster im rekonstruierten Bild führen kann.

Durch das Hinzufügen von Randbereichen an den rekonstruierten Patches, wird das wenigstens eine erste neuronale Netz beim Trainieren desselbigen darauf trainiert, die Patches an den Randbereichen so zu rekonstruieren, dass sie möglichst ähnlich dem Originalbild sind, wodurch das ungewollte Schachbrettmuster reduziert oder vermieden wird. Die Randbereiche, beispielsweise ein Rahmen um jeden Patch in einer Breite von einigen Pixeln, wird aus dem Originalbild genommen und jedem rekonstruierten Patch entsprechend hinzugefügt. Mit anderen Worten, das wenigstens eine neuronale Netz wird beim Trainieren in den Randbereichen der jeweiligen Patches festgehalten.

Durch dieses Trainieren des wenigstens einen ersten neuronalen Netzes unter Berücksichtigung der hinzugefügten Randbereiche kann sichergestellt werden, dass derartige Schachbrettmuster vermieden oder zumindest reduziert werden, da beim späteren Rekonstruieren, bei der Analyse von einem empfangenen Bild, der Inpainting Autoencoder die Randbereiche der Patches möglichst originalgetreu rekonstruiert. Das patchweise Rekonstruieren und das Hinzufügen der Randbereiche kann für eine Mehrzahl oder alle Trainingsbilder des ersten Satzes von Trainingsbildern durchgeführt werden. Bei der Vielzahl der rekonstruierten Patches, denen ein Randbereich des Originalbilds hinzugefügt wird, kann es sich um eine Mehrzahl oder alle rekonstruierten Patches beim patchweisen Rekonstruieren handeln. Alternativ oder zusätzlich können auch überlappende Patches bei der Rekonstruktion verwendet werden, um homogene Übergänge zwischen den Patches zu erzeugen.

Die Verfahren gemäß dem ersten und dem zweiten Aspekt sind computerimplementierte Verfahren.

Gemäß einem dritten Aspekt der Erfindung ist eine Vorrichtung zum Analysieren eines Produkts dazu eingerichtet, das Verfahren gemäß dem ersten und/oder dem zweiten Aspekt durchzuführen. Das Produkt ist beispielsweise ein Medizinprodukt.

Gemäß wenigstens einer vorteilhaften Ausgestaltung umfasst die Vorrichtung ferner eine Aufnahmevorrichtung zum Aufnehmen des Bildes des Medizinprodukts.

Gemäß wenigstens einer Ausgestaltung umfasst die Vorrichtung ferner eine Steuervorrichtung, die dazu eingerichtet ist, ein Aussortieren eines als fehlerhaft erkannten Medizinprodukts zu veranlassen.

Ein Vorteil hierbei ist es, dass nicht nur das Erkennen von Effekten maschinell durchgeführt werde kann, sondern auch ein Aussortieren eines als defekt erkannten Produkts maschinell ausgelöst werden kann.

Gemäß wenigstens einer Ausgestaltung ist die Vorrichtung dazu eingerichtet, an einer halbautomatischen Inspektionsvorrichtung nachgerüstet zu werden.

Eine solche halbautomatische Inspektionsvorrichtung ist beispielsweise dafür ausgelegt, dass eine Person an der Inspektionsvorrichtung sitzt und vorbeilaufende Medizinprodukte auf Defekte inspiziert. Wird von der Person ein defektes Produkt erkannt, so kann die Person ein Aussortieren des defekten Produkts auslösen, beispielsweise über einen Fußschalter oder eine Gestenerkennung.

Ein Vorteil einer nachrüstbaren Lösung der Vorrichtung zum Analysieren der Medizinprodukte ist es, dass eine solche halbautomatische Inspektionsvorrichtung zusätzlich oder alternativ mit der maschinellen Defekterkennung ausgestattet und betrieben werden kann. Dies ermöglicht eine kostengünstige und flexible Lösung zur Analyse von Medizinprodukten.

Gemäß einem vierten Aspekt der Erfindung umfasst ein System zum Analysieren eines Produkts die Vorrichtung gemäß dem dritten Aspekt und eine Inspektionsvorrichtung. Das Produkt ist beispielsweise ein Medizinprodukt.

Gemäß einem fünften Aspekt der Erfindung umfasst ein Computerprogramm Befehle, die bei der Ausführung des Computerprogramms durch einen Computer diesen veranlassen, das Verfahren gemäß dem ersten und/oder zweiten Aspekt auszuführen.

Gemäß einem sechsten Aspekt der Erfindung umfasst ein computerlesbares Speichermedium das Computerprogramm gemäß dem fünften Aspekt.

Ausgestaltungen sowie Vorteile, die bezüglich wenigstens eines der oben genannten Aspekte der Erfindung genannt sind, können analog selbstverständlich auch bei den anderen Aspekten verwendet werden bzw. auftreten. Alle vorwiegend mit Bezug auf Medizinprodukte beschriebenen Ausgestaltungen, Aspekte und Ausführungsbeispiele können analog auch auf eine Analyse eines beliebigen anderen Produkts angewendet werden.

Weitere vorteilhafte Ausgestaltungen der Erfindung sind in den nachfolgenden Figuren beschrieben sowie in den angehängten Patentansprüchen offenbart.

In den Figuren zeigen:

Figur 1    ein Flussdiagramm eines Verfahrens zum Analysieren eines Medizinprodukts gemäß einem Ausführungsbeispiel der Erfindung,

Figur 2    ein Flussdiagramm eines Verfahrens zum Trainieren einer Vorrichtung zum Analysieren eines Medizinprodukts,

Figur 3    ein System umfassend eine Inspektionsvorrichtung und eine Vorrichtung zum Analysieren eines Medizinprodukts, und

Figur 4    verschiedene Analyseetappen der Analyse eines Medizinprodukts gemäß einem Ausführungsbeispiel der Erfindung.

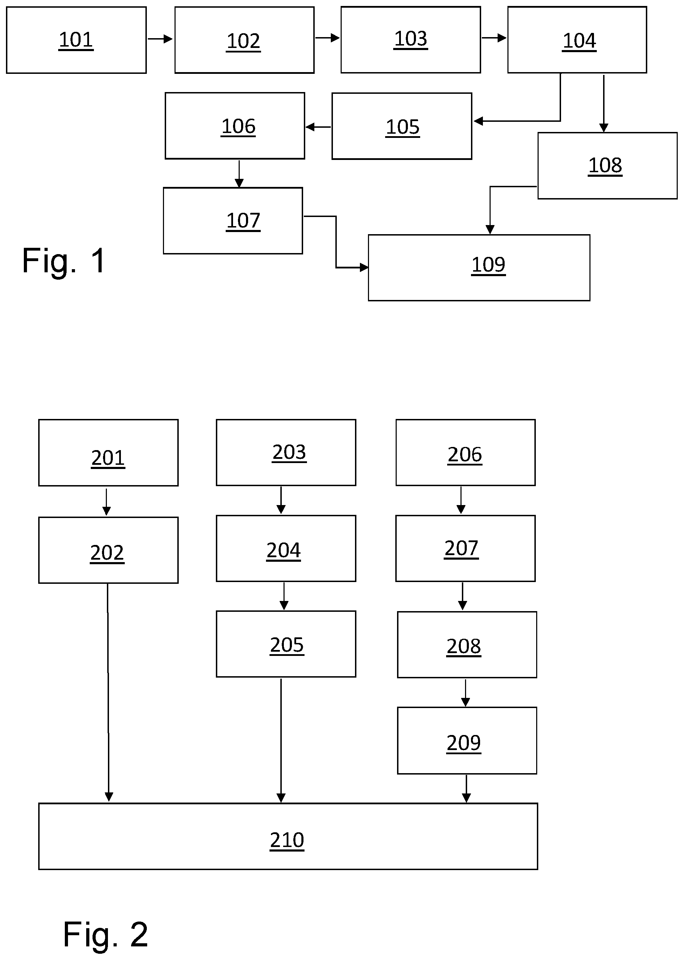

Figur 1 zeigt ein Flussdiagramm eines Verfahrens zum Analysieren eines Medizinprodukts gemäß einem Ausführungsbeispiel der Erfindung. Im Folgenden werden Ausführungsbeispiele bezüglich der Analyse eines Fläschchens mit flüssigem Arzneimittel beschrieben. Alternativ können die hier beschriebenen Ausführungsbeispiele selbstverständlich aber auch für beliebige andere Medizinprodukte verwendet werden. Medizinprodukt bezeichnet im Sinne dieser Anmeldung sowohl die Arzneimittel selbst, als auch Verpackungen für Arzneimittel, als auch die Kombination aus Arzneimitteln in entsprechender Verpackung. Weiter können die hier beschriebenen Ausführungsbeispiele selbstverständlich aber auch für beliebige andere Produkte angewendet werden. Insbesondere kann ein Bild ein Produkt selbst, eine Verpackung eines Produkts, oder eine Kombination einer Verpackung und eines Produkts zeigen. Ein Fachmann versteht im Sinne der Beschreibung, dass Merkmale, hier beschrieben mit Bezug auf ein Medizinprodukt, auch auf ein beliebiges anderes Produkt angewendet werden können.

In einem Schritt 101 wird ein Bild eines Fläschchens, welches mit flüssigem Arzneimittel gefüllt ist, aufgenommen. Hierbei handelt es sich im vorliegenden Ausführungsbeispiel um eine RGB-Fotografie des Fläschchens. Alternativ oder zusätzlich können selbstverständlich auch andere bzw. weitere Bilder, wie beispielsweise Infrarotbilder, Röntgenbilder, Schwarz-Weiß-Bilder, etc. aufgenommen werden.

In einem Schritt 102 wird das aufgenommene Bild von einer Vorrichtung zur Analyse des Medizinprodukts empfangen.

In einem Schritt 103 wird ein zu analysierendes Objekt in dem empfangenen Bild erkannt. Beispielsweise, falls das empfangene Bild das zu untersuchende Medizinprodukt in einer Produktionsumgebung, beispielsweise auf einem Fließband, auf dem eine Vielzahl solcher Medizinprodukte vor einer Kamera vorbeilaufen, zeigt, wird in diesem Schritt erkannt, wo in dem Bild das zu untersuchende Medizinprodukt genau angeordnet ist.

Alternativ oder zusätzlich ist es auch möglich, einen bestimmten Bereich eines Medizinprodukts zu erkennen, wenn insbesondere dieser Bereich analysiert werden soll. Beispielsweise falls nur ein Verschluss des Fläschchens untersucht werden soll, kann so festgestellt werden, wo sich der entsprechende Bereich in dem empfangenen Bild befindet.

Alternativ kann aber auch das Bild in Schritt 101 bereits so aufgenommen sein, dass das Bild ausschließlich das zu analysierende Fläschchen oder einen zu analysierenden Bereich zeigt, sodass die Objekterkennung in diesem Schritt übersprungen werden kann.

Für die hier beschriebene Objekterkennung können beispielsweise in der Bildverarbeitung übliche Methoden zur Objekterkennung verwendet werden.

In einem Schritt 104 wird das empfangene Bild vorverarbeitet (engl.: pre-processed). Hierbei wird das Bild beispielsweise zugeschnitten (engl.: cropping), insbesondere falls nur ein bestimmter Bereich in Schritt 103 als relevant erkannt wurde. Außerdem ist es beispielsweise möglich, an dem Bild eine Gamma-Korrektur oder sonstige Bildaufbereitungsmaßnahmen durchzuführen. Alternativ kann aber auch in Schritt 102 bereits ein Bild empfangen worden sein, welches sowohl einen passenden Bildausschnitt als auch eine passende Bildqualität aufweist, ohne dass das Bild vorverarbeitet wird.

In einem Schritt 105 wird eine Anomalieerkennung mit einem Inpainting Autoencoder an dem empfangenen und ggf. vorverarbeiteten Bild durchgeführt. Der Inpainting Autoencoder ist dazu eingerichtet, das Bild patchweise zu rekonstruieren. Hierfür ist der Inpainting Autoencoder, der wenigstens ein erstes neuronales Netz umfasst, basierend auf Trainingsdaten, die jeweils ein entsprechendes fehlerfreies Fläschchen zeigen, trainiert. Dies ist weiter unten mit Bezug auf Figur 2 genauer beschrieben. Der Inpainting Autoencoder ist dementsprechend darauf trainiert patchweise Teile des Bildes so zu rekonstruieren, dass sie ein dem Patch entsprechendes fehlerfreies und anomaliefreies Teil des Fläschchens zeigen.

Hierfür wird sukzessive jeweils ein Patch in dem empfangenen Bild geschwärzt, der dann mit dem Inpainting Autoencoder rekonstruiert wird. Da die Rekonstruktion der einzelnen Patches nicht voneinander abhängig ist, ist es auch möglich, die Rekonstruktion der einzelnen Patches parallel durchzuführen. Die rekonstruierten Patches können dann wieder zu einem rekonstruierten Gesamtbild zusammengefügt werden. Beispielsweise werden so insgesamt 48 Patches nacheinander oder parallel rekonstruiert. Beispielsweise ist das empfangene Bild, welches patchweise rekonstruiert werden soll, sowohl in Höhe als auch Breite kleiner/gleich 256 Pixel.

Das Rekonstruieren des empfangenen Bildes kann auch mehrfach durchgeführt werden, um bessere rekonstruierte Bilder zu erhalten.

Nach dem Rekonstruieren mittels dem Inpainting Autoencoder wird das rekonstruierte Bild mit dem empfangenen, ggf. vorverarbeiteten Bild verglichen. Hierbei wird der sogenannte Rekonstruktionsfehler bestimmt. Zeigt das empfangene, ggf. vorverarbeitete Bild bereits ein Fläschchen, bei dem keine Anomalien vorliegen, d.h. weder Defekte wie Kratzer, falscher Füllstand o.ä., noch optische Artefakte wie beispielsweise Spiegelungen oder Schatten, so gleichen sich das empfangene, ggf. vorverarbeitete Bild und das rekonstruierte Bild im Wesentlichen. In diesem Fall wird der Vergleich zwischen den Bildern keine wesentlichen Anomalien aufzeigen. Liegen jedoch im empfangenen, ggf. vorverarbeiteten Bild solche Anomalien vor, so sind diese im rekonstruierten Bild entfernt, und der Abgleich der Bilder weist einen Unterschied auf, der als Anomalie bei der Anomalieerkennung festgestellt wird.

Das Ergebnis der Anomalieerkennung umfasst einen Anomaliewert (oder Anomalie-Score). Je höher der Anomaliewert, desto wahrscheinlicher ist es, dass an der Flasche eine tatsächliche Anomalie vorliegt.

Außerdem ist es auch möglich, die Anomalieerkennung in Schritt 105 separat an Teilbildern des empfangenen Bilds durchzuführen. Beispielsweise wird das empfangene Bild des Fläschchens in drei Teile unterteil: einen ersten Teil, der einen Verschluss des Fläschchens zeigt, einen zweiten Teil, der einen Flaschenhals des Fläschchens zeigt - in diesem Bereich befindet sich beispielsweise auch ein oberer Rand eines in dem Fläschchen befindlichen Arzneimittels bei einem optimalen Füllstand - und in einen dritten Teil, in dem sich ein unterer Bereich des Fläschchens befindet. Dies kann zum einen eine Bearbeitungszeit der Anomalieerkennung reduzieren, wodurch eine Realtime-Anwendbarkeit des Verfahrens verbessert wird, insbesondere in Produktionsstraßen, in denen schnell, viele Fläschchen zu analysieren sind. Ferner können so höherer Auflösungen in untersuchten Bildern verwertet werden, was zu genaueren Ergebnissen bei der Anomalieerkennung führt. Außerdem ist es so möglich, unterschiedliche Bereiche der Fläschchen bei der Anomalieerkennung unterschiedlich zu beurteilen. Ist es beispielsweise bekannt, dass im Bereich des Flaschenhalses häufig Spiegelungen auftreten, die jedoch nicht als Defekt sondern lediglich als nicht-störende Anomalie zu werten sind, so können beispielsweise in diesem Bereich höhere Anomaliewerte toleriert werden.

In einem Schritt 106 wird ein binärer Klassifizierer auf das Ergebnis der Anomalieerkennung, d.h. auf den Abgleich des rekonstruierten Bildes mit dem empfangenen Bild, angewendet. Der binäre Klassifizierer umfasst in diesem Ausführungsbeispiel wenigstens ein vergleichsweise kleines zweites neuronales Netz, welches auf das Erkennen nichtstörender Anomalien trainiert ist. So erkennt der binäre Klassifizierer beispielsweise Spiegelungen oder Schattenwürfe, die eine Qualität des Medizinproduktes jedoch nicht beeinflussen. Bei dem wenigstens einen zweiten neuronalen Netz handelt es sich beispielsweise um wenigstens ein Convolutional Neural Network (CNN).

Mittels dem binären Klassifizierer kann so festgestellt werden, ob es sich bei der erkannten Anomalie, d.h. dem festgestellten Rekonstruktionsfehler, um einen tatsächlichen Defekt handelt, oder nicht. So kann mittels dem binären Klassifizierer entschieden werden, ob es sich bei dem abgebildeten Fläschchen um ein gutes oder ein auszusortierendes Fläschchen handelt. Hierbei wird wiederum eine Wahrscheinlichkeit bestimmt, ob es sich um eine bekannte Anomalie, d.h. eine unschädliche Spiegelung oder Schatten handelt, oder nicht. Kennt der binäre Klassifizierer die Anomalie nicht, so ist die Wahrscheinlichkeit hoch, dass es sich um eine schädliche Anomalie handelt. Hierfür werden beispielsweise Schwellwerte bezüglich der bestimmten Wahrscheinlichkeiten festgelegt, ab wann eine Anomalie als unschädlich oder ab wann sie als schädlich zu werten ist.

In einem Schritt 107 wird eine Attention-Map des binären Klassifizierers, d.h. des wenigstens einen zweiten neuronalen Netzes erzeugt. Auf diese Weise kann festgestellt werden, welcher Teil in der Darstellung des Rekonstruktionsfehlers dazu geführt hat, dass ein Fläschchen beispielsweise als "schlecht" bestimmt wurde, und so ein Ort der Anomalie bzw. des Defekts bestimmt werden. Hierfür kann beispielsweise die Gradient Based Class Activation Map (Grad-CAM) Technologie verwendet werden. Hierbei wird insbesondere beispielsweise der letzte Schritt der Faltungen des neuronalen Netzes analysiert, um zu bestimmen, wo der Gradient des letzten Layers zur Bestimmung ob ein Defekt vorliegt oder nicht, am größten ist.

In einem Schritt 108 wird eine Defekterkennung an dem empfangenen und ggf. vorverarbeiteten Bild vorgenommen. Die Defekterkennung basiert auf wenigstens einem dritten neuronalen Netz, welches in dem hier gezeigten Beispiel basierend auf insgesamt drei Trainingsdatensätzen trainiert ist. Dies ist genauer mit Bezug auf Figur 2 beschrieben.

Bei der Defekterkennung werden Defekte, die dem wenigstens einen dritten neuronalen Netz bekannt sind, in dem empfangenen Bild erkannt und lokalisiert. Um den erkannten Fehler wird eine Bounding Box gezeichnet und der Fehlertyp, der ebenfalls von dem wenigstens einen dritten neuronalen Netz bestimmt wird, wird der entsprechenden Bounding Box zugeordnet. Hierbei kann eine Netzarchitektur zur Objekterkennung und Lokalisierung, beispielsweise ein You-Only-Look-Once-Modell (YOLO-Modell), verwendet werden. Insbesondere kann hierbei ein YOLOv4 Modell verwendet werden. Die Defekterkennung bestimmt ebenfalls eine Wahrscheinlichkeit bezüglich eines erkannten Fehlers, die angibt, wie sicher sich das wenigstens eine dritte neuronale Netz ist, dass es sich um einen Fehler handelt.

In dem hier gezeigten Beispiel wird die Defekterkennung auf das gesamte empfangene, ggf. vorverarbeitete Bild angewendet. Alternativ ist es aber selbstverständlich auch möglich, wie bei der Anomalieerkennung, das Bild in mehrere Teile zu unterteilen.

In einem Schritt 109 wird eine Auswertung der Analyse des Fläschchens vorgenommen. Hierbei werden die jeweiligen Wahrscheinlichkeiten, die von der Anomalieerkennung, dem binären Klassifizierer und der Defekterkennung bestimmt wurden, gegeneinander gewichtet. Diese Gewichtungen können, je nach Anwendungsfall gewählt werden, um ein bestmögliches und passendes Ergebnis bei der Analyse zu erzielen.

Beispielsweise wird zunächst der bei der Anomalieerkennung festgestellte Rekonstruktionsfehler gegenüber einem Ergebnis des binären Klassifizierers gewichtet, um festzustellen, ob und wo ein Defekt oder eine sonstige, unschädliche Anomalie vorliegt. Anschließend wird dieses Ergebnis im hier gezeigten Ausführungsbeispiel gegenüber dem Ergebnis der Defekterkennung gewichtet. Anschließend, je nachdem wie Grenzwerte für die einzelnen Gewichtungen verteilt sind, kann festgestellt werden, ob das in dem aufgenommenen Bild abgebildete Fläschchen auszusortieren ist, oder nicht. Wurde das Bild für die Anomalieerkennung in mehrere Bildteile aufgeteilt, so kann diese Auswertung für jeden Teil vorgenommen werden, und anschließend bestimmt werden, dass, beispielsweise wenn einer der drei Bildteile als schlecht bewertet wurde, das Fläschchen auszusortieren ist.

Figur 2 zeigt ein Flussdiagramm eines Verfahrens zum Trainieren einer Vorrichtung zum Analysieren eines Medizinprodukts. Figur 2 wird ebenfalls bezüglich der Analyse eines Fläschchens mit flüssigem Arzneimittel beschrieben. Das hier gezeigte Verfahren kann aber auch für beliebige andere Medizinprodukte verwendet werden.

In einem Schritt 201 wird ein erster Satz von Trainingsbildern erstellt. Dieser erste Satz von Trainingsbildern umfasst Bilder, die Fläschchen zeigen, die defekt- und anomaliefrei sind. Diese Fläschchen sind somit Fläschchen, die bei einer Analyse nicht aussortiert werden sollen.

In einem Schritt 202 wird wenigstens ein erstes neuronales Netz eines Inpainting Autoencoders mit dem ersten Satz von Trainingsbildern trainiert. Der Inpainting Autoencoder wird dazu trainiert, ein Bild eines Fläschchens zu rekonstruieren, so wie es in einem defekt- und anomaliefreien Zustand aussehen würde.

Bei diesem Trainieren wird, wie oben bezüglich der Rekonstruktion beschrieben, jedes Trainingsbild patchweise rekonstruiert. Bei dem Zusammensetzen der rekonstruierten Patches, sowohl beim Trainieren als auch beim späteren Analysieren, kann es dazu kommen, dass Übergänge an den Rändern der einzelnen Patches zu Nachbar-Patches sichtbar werden, da die einzelnen Patches unabhängig voneinander rekonstruiert werden. Um dies zu verringern oder zu vermeiden werden im hier gezeigten Ausführungsbeispiel, beim Trainieren des wenigstens einen ersten neuronalen Netz, jeweils rekonstruierte Patches mit entsprechenden Rahmen, beispielsweise in einer Breite von wenigen Pixeln, des jeweiligen Patches aus dem ursprünglichen Bild ergänzt.

Auf diese Weise wird das wenigstens eine erste neuronale Netz darauf trainiert, die Patches in den jeweiligen Randbereichen möglichst originalgetreu zu rekonstruieren. Ausschlaggebend hierfür ist es, dass durch das Hinzufügen des Rahmens aus dem Originalbild beim Trainieren des wenigstens einen ersten neuronalen Netzes sichtbare Kantenübergänge bei der Berechnung von Loss-Metriken als negativ bewertet werden, da eine strukturelle Ähnlichkeit zwischen dem rekonstruierten Bild und dem Originalbild verglichen wird. Durch die negative Bewertung bestraft die Auswertung der Rekonstruktionen diese sichtbaren Kantenübergänge, wodurch das wenigstens eine erste neuronale Netz darauf trainiert wird, diese sichtbaren Kantenübergänge zu reduzieren, indem die Randbereiche der Patches näher an dem Originalbild orientiert rekonstruiert werden. Auf diese Weise können bessere Ergebnisse bei der Anomalieerkennung erzielt werden.

Der Inpainting Autoencoder wird beispielsweise basierend auf folgender Verlustfunktion trainiert:

$$\frac{1}{n}\sum_{i=1}^{n}(\lambda_{emph} \cdot \left\|P_i - \widetilde{P_i}\right\| + (1 - \lambda_{emph}) \cdot \left\|X_{i,P} - \tilde{X}_{i,P}\right\| + \lambda_{ssim} \cdot (1 -$$

$$SSIM(P_{i,pad}, \tilde{P}_{i,pad})))$$

wobei $\lambda_{emph}$, $\lambda_{ssim} \in [0,1]$ skalierende Hyperparameter sind, $\|\cdot\|$ jegliche Norm sein kann, beispielsweise $L_1$- oder $L_2$-Norm, und SSIM(x,y) ein Maß für die strukturelle Ähnlichkeit zwischen zwei Bildern x und y ist. $X_1$, ..., $X_n$ beschreibt eine Menge von Trainingsbildern mit n Bildern. Hierbei wird beispielsweise ein Graustufenbild $X_i$ als m x m Matrix mit Werten im Intervall [0,1] betrachtet, wobei m die Seitenlänge des Bildes beschreibt (analog für nicht-quadratische Bilder auch möglich).

Bei jedem Bild $X_i$ sei $P_i$ die quadratische Submatrix, die den Patch beschreibt, der geschwärzt wird und rekonstruiert werden soll. Dementsprechend beschreibt $X_{i,P}$ für jedes Bild $X_i$ ein entsprechendes Bild, bei dem $P_i$ geschwärzt ist. Die Trainingsbilder $X_{i,P}$ werden dem wenigstens einen ersten neuronalen Netz zugeführt und dieses berechnet die rekonstruierten Bilder $\tilde{X}_{i,P}$, die die rekonstruierten Patches $\tilde{P}_i$ enthalten.

Ferner sei $\tilde{P}_{i,pad}$ (bzw. $P_{i,pad}$) das rekonstruierte (bzw. originale) Patch, bei dem ein Rahmen von wenigen Pixeln aus dem Originalbild hinzugefügt wird.

In einem Schritt 203 wird ein zweiter Satz von Trainingsbildern erstellt. Dieser zweite Satz von Trainingsbildern umfasst Ergebnisse des zuvor trainierten Inpainting Autoencoders. Mit anderen Worte, der zweite Satz von Trainingsbildern umfasst solche Bilder, in denen mittels dem Inpainting Autoencoder ein Rekonstruktionsfehler sichtbar gemacht wurde. Hierbei kann es sich tatsächlich um Defekte oder um sonstige Anomalien handeln (beispielsweise Spiegelungen) die nicht als Defekte zu werten sind.

In einem Schritt 204 werden in dem zweiten Satz von Trainingsbilder Anomalien gelabelt. Hierzu werden sichtbare Anomalien von einem Experten kategorisiert, insbesondere dahingehend, ob und wo ein Defekt vorliegt, oder ob und wo eine nicht als Defekt zu wertende Anomalie vorliegt.

In einem Schritt 205 wird wenigstens ein zweites neuronales Netz eines binären Klassifizierers mit dem gelabelten zweiten Satz von Trainingsbildern trainiert. Auf diese Weise wird der binäre Klassifizierer darauf trainiert, in Rekonstruktionsfehlern, die mittels dem Inpainting Autoencoder visualisiert werden, zu unterscheiden, ob ein bekannter Defekt, eine bekannte Anomalie, die nicht als Defekt zu werten ist, oder eine unbekannte Anomalie vorliegt.

Alternativ oder zusätzlich kann der binäre Klassifizierer auch auf anderen Verfahren zur Interpretation des Differenzbildes, welches mittels dem Inpainting Autoencoder erstellt wurde, basieren. So können für den binären Klassifizierer beispielsweise auch regelbasierte Verfahren verwendet werden, anhand derer bestimmt wird, ob eine Anomalie als Defekt zu erkennen ist oder nicht.

In einem Schritt 206 wird ein erster dritter Satz von Trainingsbildern erstellt. Dieser erste dritte Satz von Trainingsbildern umfasst Bilder, die defektbehaftete Fläschchen zeigen. Hierbei kann es sich um Fläschchen mit falschem Füllstand, Kratzern, nicht richtig sitzendem Verschluss, Verunreinigungen, Blasenbildungen in der Flüssigkeit, etc. handeln. Die Defekte in dem ersten dritten Satz von Trainingsbildern sind von einem Experten gelabelt.

In einem Schritt 207 wird wenigstens ein drittes neuronales Netz für eine Defekterkennung mit dem ersten dritten Satz von Trainingsbildern trainiert. Das wenigstens eine dritte neuronale Netz wird darauf trainiert, die aus dem ersten dritten Satz von Trainingsbildern bekannten Defekte an den Fläschchen zu erkennen.

In einem Schritt 208 wird ein zweiter dritter Satz und ein dritter dritter Satz von Trainingsbildern erstellt. Der zweite dritte Satz von Trainingsbildern umfasst sowohl Trainingsbilder, die defektfreie, als auch solche, die defektbehaftete Fläschchen zeigen. Beispielsweise, um ein gutes Ergebnis zu erzielen, können in dem zweiten dritten Satz von Trainingsbildern die Anzahl der Trainingsbilder mit defektbehafteten und die Anzahl der Trainingsbilder mit defektfreien Fläschchen gleich sein.

Der dritte dritte Satz von Trainingsbildern umfasst solche Trainingsbilder, die defektfreie Fläschchen zeigen, die aber fälschlicherweise vom wenigstens einen dritten neuronalen Netz als defektbehaftet erkannt wurden.

In einem Schritt 209 wird das wenigstens eine dritte neuronale Netz zusätzlich basierend auf dem zweiten und dritten dritten Satz von Trainingsbildern trainiert und ein gewichtetes Ensemble erstellt, das den Defekterkenner bildet. Hierbei spricht man von "Negative-Sampling" und "Hard-Negative-Sampling". Auf diese Weise wird eine Defekterkennung mit dem Defekterkenner verbessert.

In einem Schritt 210 werden Gewichtungen bestimmt, mit der die Ergebnisse der Anomalieerkennung, des binären Klassifizierers und der Defekterkennung gegeneinander gewichtet werden sollen. Die Gewichtungen können so gewählt werden, dass eine ausreichend hohe Qualitätssicherung erzielt wird, aber möglichst keine Fläschchen ohne Defekt als defektbehaftet bestimmt werden.

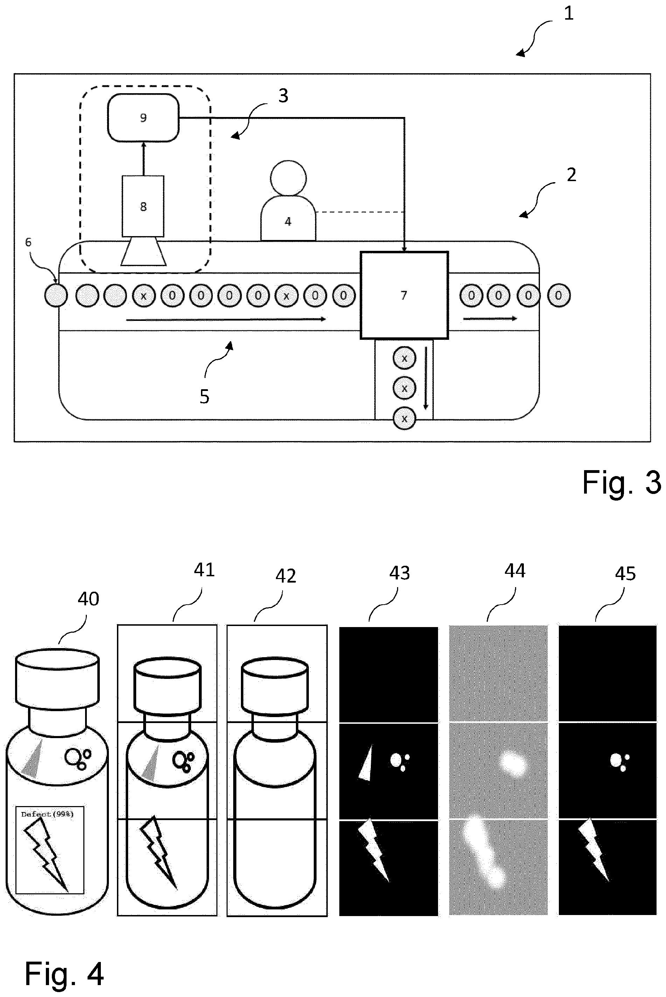

Figur 3 zeigt ein System 1 umfassend eine Inspektionsvorrichtung 2 und eine Vorrichtung 3 zum Analysieren eines Medizinprodukts. Die Inspektionsvorrichtung 2 kann beispielsweise eine handelsübliche Inspektionsvorrichtung 2 für derartige Zwecke sein, in dem hier gezeigten Ausführungsbeispiel ist es eine halbautomatische Inspektionsvorrichtung 2. Dabei sitzt ein Arbeiter 4 an einem Fließband 5, auf dem zu analysierende Fläschchen 6 vorbeitransportiert werden. Die Fläschchen 6 können von dem Arbeiter 4 begutachtet werden und in einer Sortiermaschine 7 aussortiert werden, wenn es sich um defektbehaftete Fläschchen handelt. Defektbehaftete Fläschchen 6 sind hierbei mit einem "X" markiert, fehlerfreie Fläschchen mit einem "O". Die fehlerfreien Fläschchen 6 werden von der Sortiermaschine 7 nicht aussortiert und können weiter in der Produktion verarbeitet werden.

Die Vorrichtung 3 zum Analysieren der Fläschchen umfasst eine Kamera 8, die auf die zu analysierenden Fläschchen 6 gerichtet ist. Mit der Kamera 8 wird ein Bild eines zu analysierende Fläschchens 6 aufgenommen, und an einen Computer 9 der Vorrichtung 3 gesendet. Das Bild kann auch mehrere Fläschchen 6 zeigen, in welchem Fall der Computer 9 die einzelnen Fläschchen 6 in dem Bild erkennen kann, um jedes einzeln zu beurteilen. Alternativ können auch mehrere Kameras vorgesehen sein. Alternativ kann auch die Kamera 8 von jedem Fläschchen 6 mehrere Bilder aufnehmen, beispielsweise während diese gedreht werden, um mehrere Perspektiven des Fläschchens 6 zu erfassen, und so noch bessere Ergebnisse bei der Analyse zu erzielen.

Die Vorrichtung 3 ist dazu eingerichtet, das Verfahren zum Analysieren von Medizinprodukten, wie es in dieser Anmeldung beschrieben ist, beispielsweise in der Ausgestaltung wie es mit Bezug auf Figur 1 erläutert ist, auszuführen.

In dem hier gezeigten Ausführungsbeispiel ist die Vorrichtung 3 eine nachrüstbare Vorrichtung, die an die Inspektionsvorrichtung 2 angeschlossen wird. Insbesondere ist es möglich, die hier gezeigte Vorrichtung 3 werkzeugfrei an der Inspektionsvorrichtung 2 anzubringen. Auf diese Weise kann die Vorrichtung 3 den Arbeiter 4 unterstützen oder ersetzen.

Die Vorrichtung 3 ist beispielsweise über Optokoppler an ein Schaltungssystem der Inspektionsvorrichtung 2 angeschlossen, um Signale der Inspektionsvorrichtung 2 zu erfassen.

Insbesondere für ein Tracking der Fläschchen 6 auf dem Fließband 5 ist dies geeignet, um anschließend, falls ein Fläschchen 6 von der Vorrichtung 3 als defektbehaftet erkannt wurde, ein entsprechendes Signal senden zu können, damit dieses Fläschchen 6 aussortiert werden kann. Hierfür werden beispielsweise Zeitstempel verwendet, die einem bestimmten Fläschchen 6 zuordnebar sind. Da Laufzeiten der Fläschchen 6 in der Inspektionsvorrichtung 2 bekannt sind, kann so die Vorrichtung 3 genau bestimmen, wann das Fläschchen 6, dessen Bild von der Kamera 8 zu einem gewissen Zeitpunkt aufgenommen wurde, an der Sortiermaschine 7 angelangt ist, um so dieses Fläschchen 6 auszusortieren.

Hierfür ist der Computer 9 ebenfalls an die Sortiermaschine 7 angeschlossen, beispielsweise ebenfalls über Optokoppler. So kann der Computer 9 der Sortiermaschine 7 ein Signal geben, wenn ein Fläschchen 6 aussortiert werden soll.

Alternativ kann die hier beschriebene Analyse eines Medizinprodukts selbstverständlich jedoch auch in einer vollautomatischen Inspektionsvorrichtung verwendet werden.

Figur 4 zeigt verschiedene Analyseetappen der Analyse eines Medizinprodukts, in diesem Fall eines Fläschchens, gemäß einem Ausführungsbeispiel der Erfindung. Beispielsweise wurde das hier gezeigte Fläschchen mit der Vorrichtung, wie sie mit Bezug auf Figur 3 beschrieben ist, analysiert.

Ein erster Ausschnitt 40 zeigt ein Ergebnis eines Defekterkenners, der in einem unteren Bereich des Fläschchens einen Defekt mit einer Wahrscheinlichkeit von 99% erkannt und mit einer Bounding Box versehen hat, in der hier "Defect (99%)" vermerkt ist. Dieses Fläschchen wurde entsprechend durch den Defekterkenner als "schlecht" markiert.

Ein zweiter Ausschnitt 41 zeigt ein empfangenes Bild des Fläschchens, wie es beispielsweise von der oben beschriebenen Vorrichtung empfangen wurde.

Ein dritter Ausschnitt 42 zeigt ein mit einem Inpainting Autoencoder rekonstruiertes Bild des Fläschchens.

Ein vierter Ausschnitt 43 zeigt ein Ergebnis einer Anomalieerkennung, d.h. einen Rekonstruktionsfehler. Hier ist insbesondere zu erkennen, dass in einem mittleren Bereich des Fläschchens Anomalien erkannt wurden, sowie im unteren Bereich. Hierbei handelt es sich unter anderem um die in Ausschnitt 41 sichtbaren Bläschen oberhalb der Flüssigkeit. Diese Bläschen wurden mittels dem Inpainting Autoencoder entfernt, sodass sie als Rekonstruktionsfehler zu erkennen sind. Diese Bläschen, beispielsweise, wurden von dem Defekterkenner nicht als Defekt erkannt und nicht mit einer Bounding Box versehen. Außerdem als Anomalien erkannt wurde eine Spiegelung im Bereich des Flaschenhalses, sowie der Defekt im unteren Bereich

Ein fünfter Ausschnitt 44 zeigt eine Attention-Map eines binären Klassifizierers, der auf den Ausschnitt 43 angewendet wurde.

Ein sechster Ausschnitt 45 zeigt eine anhand der Attention-Map gewichtete Rekonstruktionsdifferenz. Anhand dieser gewichteten Rekonstruktionsdifferenz wird bestimmt, welcher Teilbereich des Fläschchens bei der Anomalieerkennung bzw. dem binären Klassifizierer als "schlecht" zu bewerten ist.

Dies ist im vorliegenden Fall für den unteren und den mittleren Bereich geschehen.

Bezugszeichenliste

1   System

| 2 | Inspektionsvorrichtung |
| 3 | Vorrichtung zum Analysieren eines Medizinprodukts |
| 4 | Arbeiter |
| 5 | Fließband |
| 6 | Fläschchen |
| 7 | Sortiermaschine |
| 8 | Kamera |
| 9 | Computer |

| 40 - 45 | Ausschnitte |
| 101 - 109 | Verfahrensschritte |
| 201 - 210 | Verfahrensschritte |

**Patentansprüche**

1. Verfahren zum Analysieren eines Produkts, das Verfahren umfassend die Schritte:

   - Empfangen (102) eines Bildes des Produkts;
   - Durchführen einer Anomalieerkennung (105) an dem empfangenen Bild mittels eines Inpainting Autoencoders, wobei mittels der Anomalieerkennung eine Abweichung zwischen dem empfangenen Bild des Produkts und einem mit dem Inpainting Autoencoder rekonstruierten anomaliefreien Pendant zu dem empfangenen Bild feststellbar ist, und wobei der Inpainting Autoencoder wenigstens ein erstes neuronales Netz umfasst, welches basierend auf einem ersten Satz von Trainingsbildern trainiert ist, und der erste Satz von Trainingsbildern eine Vielzahl von Trainingsbildern umfasst, die jeweils ein entsprechendes fehlerfreies Produkt zeigen;

   das Verfahren **gekennzeichnet durch** die folgenden Schritte:

   - Bestimmen (106), mittels eines binären Klassifizierers, anhand eines Ergebnisses der Anomalieerkennung, ob ein Defekt vorliegt oder nicht, wobei eine Anomalie als Defekt gewertet wird, wenn diese eine Qualität des Produkts negativ beeinflussen kann;
   - Durchführen einer Defekterkennung (108) an dem empfangenen Bild mittels eines Defekterkenners, wobei der Defekterkenner wenigstens ein drittes neuronales Netz umfasst, welches basierend auf wenigstens einem dritten Satz von Trainingsbildern trainiert ist, und der wenigstens eine dritte Satz von Trainingsbildern eine Vielzahl von Trainingsbildern umfasst, die jeweils ein entsprechendes fehlerhaftes Produkt zeigen;
   - Auswerten (109) eines Ergebnisses der Analyse des empfangenen Bildes basierend auf einem Gewichten der Ergebnisse der Anomalieerkennung, der Defekterkennung und des binären Klassifizierers, wobei die jeweiligen Gewichtungen Wahrscheinlichkeiten, dass es sich um einen tatsächlichen Defekt handelt, bestimmen.

2. Verfahren gemäß Anspruch 1, wobei für das Durchführen der Anomalieerkennung (105) das empfangene Bild in wenigstens zwei Teilbilder unterteilt wird, die Anomalieerkennung an den einzelnen Teilbildern durchgeführt wird und der binäre Klassifizierer auf die Ergebnisse der Anomalieerkennung der einzelnen Teilbilder angewandt wird.

3. Verfahren gemäß einem der Ansprüche 1 oder 2, wobei bei der Defekterkennung (108) ferner ein Ort eines erkannten Defekts in dem empfangenen Bild und/oder ein Typ des erkannten Defekts und/oder eine Defektwahrscheinlichkeit bestimmt wird.

4. Verfahren gemäß einem der Ansprüche 1 bis 3, wobei bei dem Bestimmen (106), mittels des binären Klassifizierers, anhand eines Ergebnisses der Anomalieerkennung ob ein Defekt vorliegt oder nicht, der binäre Klassifizierer anhand eines Rekonstruktionsfehlers einer mittels dem Inpainting Autoencoder rekonstruierten Version des empfangenen Bildes auswertet, ob das in dem empfangenen Bild dargestellte Produkt als fehlerhaft oder fehlerfrei zu bewerten ist.

5. Verfahren gemäß einem der Ansprüche 1 bis 4, wobei der binäre Klassifizierer wenigstens ein zweites neuronales Netz umfasst, welches basierend auf einem zweiten Satz von Trainingsbildern trainiert ist, und der zweite Satz von Trainingsbildern Ergebnisse des Inpainting Autoencoders umfasst; und wobei ferner eine Attention-Map des wenigstens einen zweiten neuronalen Netzes beim Anwenden des binären Klassifizierers erstellt wird (107), wobei die Attention-Map eine Betrachtung darstellt, an welchen Stellen des empfangenen Bildes das wenigstens eine zweite neuronale Netz eine höhere Aktivität aufweist.

6. Verfahren zum Trainieren eines Systems zum Analysieren eines Produkts, das Verfahren umfassend die Schritte:

- Erstellen (201) eines ersten Satzes von Trainingsbildern, wobei der erste Satz von Trainingsbildern eine Vielzahl von Trainingsbildern umfasst, die jeweils ein fehlerfreies Produktzeigen;
- Trainieren (202) wenigstens eines ersten neuronalen Netzes eines Inpainting Autoencoders basierend auf dem ersten Satz von Trainingsbildern;
- Erstellen eines binären Klassifizierers, der dazu eingerichtet ist, anhand eines Ergebnisses einer Anomalieerkennung mittels dem Inpainting Autoencoder zu erkennen, ob ein Defekt vorliegt oder nicht, wobei mittels der Anomalieerkennung eine Abweichung zwischen einem empfangenen Bild des Produkts und einem mit dem Inpainting Autoencoder rekonstruierten anomaliefreien Pendant zu dem empfangenen Bild feststellbar ist, und wobei eine Anomalie als Defekt gewertet wird, wenn diese eine Qualität des Produkts negativ beeinflussen kann;
- Erstellen (206) wenigstens eines dritten Satzes von Trainingsbildern, wobei der wenigstens eine dritte Satz von Trainingsbildern eine Vielzahl von Trainingsbildern umfasst, die jeweils ein fehlerhaftes Produktzeigen, und wobei ferner wenigstens ein Fehler in jedem Trainingsbild des dritten Satzes von Trainingsbildern markiert ist;
- Trainieren (207) wenigstens eines dritten neuronalen Netzes eines Defekterkenners basierend auf dem wenigstens einen dritten Satz von Trainingsbildern;
- Bestimmen einer Gewichtung, mittels der Ergebnisse einer Anomalieerkennung mittels dem Inpainting Autoencoder, einer Defekterkennung mittels dem Defekterkenner und einer Anwendung des binären Klassifizierers auszuwerten sind.

7. Verfahren zum Trainieren gemäß Anspruch 6, wobei das Erstellen des binären Klassifizierers folgendes umfasst:

- Erstellen (203) eines zweiten Satzes von Trainingsbildern, wobei der zweite Satz von Trainingsbildern Ergebnisse des Inpainting Autoencoders umfasst;
- Trainieren (205) wenigstens eines zweiten neuronalen Netzes des binären Klassifizierers basierend auf dem zweiten Satz von Trainingsbildern.

8. Verfahren zum Trainieren gemäß einem der Ansprüche 6 oder 7, ferner umfassend den Schritt:

- Erstellen (208) eines weiteren dritten Satzes von Trainingsbildern, wobei der weitere dritte Satz von Trainingsbildern sowohl eine Vielzahl von Trainingsbildern umfasst, die jeweils ein fehlerhaftes Produktzeigen, als auch eine Vielzahl von Trainingsbildern umfasst, die jeweils ein fehlerfreies Produktzeigen, und wobei das Trainieren des wenigstens einen dritten neuronalen Netzes zusätzlich basierend auf dem weiteren dritten Satz von Trainingsbildern durchgeführt wird (209).

9. Verfahren zum Trainieren gemäß einem der Ansprüche 6 bis 8, ferner umfassend den Schritt:

- Erstellen (208) eines noch weiteren dritten Satzes von Trainingsbildern, wobei der noch weitere dritte Satz von Trainingsbildern eine Vielzahl von Trainingsbildern umfasst, die jeweils ein fehlerfreies Produktzeigen, welches von dem zuvor trainierten wenigstens einen dritten neuronalen Netz als fehlerhaft erkannt wurde, und wobei das Trainieren des wenigstens einen dritten neuronalen Netzes zusätzlich basierend auf dem noch weiteren dritten Satz von Trainingsbildern durchgeführt wird (209).

10. Verfahren zum Trainieren gemäß einem der Ansprüche 6 bis 9, wobei das Trainieren (202) des wenigstens eines ersten neuronalen Netzes des Inpainting Autoencoders basierend auf dem ersten Satz von Trainingsbildern ferner umfasst:

- patchweise Rekonstruieren eines Trainingsbilds des ersten Satzes von Trainingsbildern;
- Hinzufügen, für eine Vielzahl von rekonstruierten Patches, eines Randbereichs aus einem entsprechenden Teil des ursprünglichen Trainingsbilds; und
- Trainieren des wenigstens einen ersten neuronalen Netzes des Inpainting Autoencoders mittels der rekonstruierten Patche des Trainingsbilds unter Berücksichtigung der hinzugefügten Randbereiche.

11. Verfahren gemäß einem der Ansprüche 1 bis 10, wobei das Produkt ein Medizinprodukt ist und wobei das Medizinprodukt wenigstens eines der Folgenden umfasst:

- ein flüssiges Arzneimittel,
- ein festes Arzneimittel,

- ein flüssiges Arzneimittel in einer Verpackung,
- ein festes Arzneimittel in einer Verpackung,
- eine Ampulle für Arzneimittel,
- ein Fläschchen für Arzneimittel,
- eine Blister-Verpackung.

12. Vorrichtung (3) zum Analysieren eines Produkts (6), wobei die Vorrichtung (3) dazu eingerichtet ist, das Verfahren gemäß einem der Ansprüche 1 bis 6 und/oder das Verfahren gemäß einem der Ansprüche 7 bis 11 durchzuführen.

13. Vorrichtung (3) gemäß Anspruch 12, wobei die Vorrichtung ferner eine Aufnahmevorrichtung (8) zum Aufnehmen des Bildes des Produkts (6) umfasst; und/oder ferner eine Steuervorrichtung umfasst, die dazu eingerichtet ist, ein Aussortieren eines als fehlerhaft erkannten Produkts (6) zu veranlassen.

14. Vorrichtung (3) gemäß einem der Ansprüche 12 oder 13, wobei die Vorrichtung (3) dazu eingerichtet ist, an einer halbautomatischen Inspektionsvorrichtung (1) nachgerüstet zu werden.

15. System (1) zum Analysieren eines Produkts (6) umfassend die Vorrichtung (3) gemäß einem der Ansprüche 12 bis 14 und eine Inspektionsvorrichtung (2).

16. Computerprogramm umfassend Befehle, die bei der Ausführung des Computerprogramms durch einen Computer diesen veranlassen, das Verfahren nach einem der Ansprüche 1 bis 5 und/oder 6 bis 11 auszuführen.

17. Computerlesbares Speichermedium umfassend das Computerprogramm gemäß Anspruch 16.

**Claims**

1. A method of analyzing a product, the method comprising the steps of:

    - receiving (102) an image of the product;
    - performing an anomaly detection (105) on the received image using an inpainting autoencoder, wherein a difference between the received image of the product and an anomaly-free counterpart of the received image reconstructed by the inpainting autoencoder is detectable using the anomaly detection, and wherein the inpainting autoencoder comprises at least one first neural network, which is trained based on a first set of training images, and the first set of training images comprises a plurality of training images each showing a corresponding defect-free product;

    the method **characterized by** the following steps:

    - determining (106), using a binary classifier, whether or not a defect is present based on a result of the anomaly detection, wherein an anomaly is considered a defect if it can negatively affect a quality of the product;
    - performing defect detection (108) on the received image using a defect detector, wherein the defect detector comprises at least one third neural network trained based on at least one third set of training images, and the at least one third set of training images comprises a plurality of training images each indicating a corresponding defective product;
    - evaluating (109) a result of the analysis of the received image based on a weighting of the results of the anomaly detection, the defect detection and the binary classifier, wherein the respective weightings determine probabilities that it is an actual defect.

2. The method according to claim 1, wherein to perform the anomaly detection (105), the received image is divided into at least two sub-images, the anomaly detection is performed on the individual sub-images, and the binary classifier is applied to the results of the anomaly detection of the individual sub-images.

3. The method according to any one of claim 1 or 2, wherein in performing the defect detection (108) further a location of a detected defect in the received image and/or a type of the detected defect and/or a defect probability is determined.

4. The method according to any one of claims 1 to 3, wherein in determining (106), using the binary classifier, whether or not a defect is present based on a result of the anomaly detection, the binary classifier evaluates whether the product represented in the received image is to be evaluated as defective or defect-free based on a reconstruction error of a version of the received image reconstructed by means of the inpainting autoencoder.

5. The method according to any one of claims 1 to 4, wherein the binary classifier comprises at least one second neural network trained based on a second set of training images, and the second set of training images comprises results of the inpainting autoencoder; and wherein further an attention map of the at least one second neural network is created (107) upon applying the binary classifier, wherein the attention map represents an observation of where in the received image the at least one second neural network has higher activity.

6. A method of training a system for analyzing a product, the method comprising the steps of:

- creating (201) a first set of training images, the first set of training images comprising a plurality of training images each showing a defect-free product;
- training (202) at least one first neural network of an inpainting autoencoder based on the first set of training images;
- creating a binary classifier which is configured to recognize whether or not a defect is present based on a result of an anomaly detection by means of the inpainting autoencoder, wherein a difference between a received image of the product and an anomaly-free counterpart to the received image reconstructed with the inpainting autoencoder can be determined by means of the anomaly detection, and wherein an anomaly is evaluated as a defect if it can negatively influence a quality of the product;
- creating (206) at least one third set of training images, wherein the at least one third set of training images comprises a plurality of training images each showing a defective product, and wherein further at least one defect is marked in each training image of the third set of training images;
- training (207) at least one third neural network of a defect detector based on the at least one third set of training images;
- determining a weighting by means of which the results of an anomaly detection by the inpainting autoencoder, a defect detection by the defect detector, and an application of the binary classifier are to be evaluated.

7. The method of training according to claim 6, wherein creating the binary classifier comprises:

- creating (203) a second set of training images, wherein the second set of training images comprises results of the inpainting autoencoder;
- training (205) at least one second neural network of the binary classifier based on the second set of training images.

8. The method of training according to any one of claims 6 or 7, further comprising the step of:

- creating (208) a further third set of training images, wherein the further third set of training images comprises both a plurality of training images each showing a defective product and a plurality of training images each showing a defect-free product, and wherein the training of the at least one third neural network is additionally performed (209) based on the further third set of training images.

9. The method of training according to any one of claims 6 to 8, further comprising the step of:

- creating (208) a still further third set of training images, wherein the still further third set of training images comprises a plurality of training images each showing an error-free product recognized as erroneous by the previously trained at least one third neural network, and wherein the training of the at least one third neural network is additionally performed (209) based on the still further third set of training images.

10. The method of training according to any one of claims 6 to 9, wherein training (202) the at least one first neural network of the inpainting autoencoder based on the first set of training images further comprises:

- patchwise reconstruction of a training image of the first set of training images;
- adding, for a plurality of reconstructed patches, an edge region from a corresponding part of the original training image; and
- training the at least one first neural network of the inpainting autoencoder using the reconstructed patches of the training image, taking into account the added edge regions.

11. The method according to any one of claims 1 to 10, wherein the product is a medical product and wherein the medical product comprises at least one of the following:

    - a liquid medicine,
    - a solid medicine,
    - a liquid medicine in a package,
    - a solid medicine in a package,
    - one ampoule for medicines,
    - a vial for medicines,
    - a blister pack.

12. An apparatus (3) for analyzing a product (6), wherein the apparatus (3) is adapted to perform the method according to any one of claims 1 to 6 and/or the method according to any one of claims 7 to 11.

13. The apparatus (3) according to claim 12, wherein the apparatus further comprises a capture device (8) for capturing the image of the product (6); and/or further comprises a control device arranged to cause sorting out of a product (6) recognized as defective.

14. The apparatus (3) according to any one of claims 12 or 13, wherein the apparatus (3) is configured to be retrofitted to a semi-automatic inspection device (1).

15. A system (1) for analyzing a product (6) comprising the apparatus (3) according to any one of claims 12 to 14 and an inspection device (2).

16. A computer program comprising instructions which, when the computer program is executed by a computer, cause the computer to execute the method according to any one of claims 1 to 5 and/or 6 to 11.

17. A computer-readable storage medium comprising the computer program according to claim 16.

**Revendications**

1. Procédé d'analyse d'un produit, le procédé comprenant les étapes consistant à :

    - réception (102) d'une image du produit ;
    - effectuer une détection d'anomalie (105) sur l'image reçue au moyen d'un auto-encodeur d'inpainting, dans lequel, au moyen de la détection d'anomalie, une différence peut être détectée entre l'image reçue du produit et un équivalent sans anomalie de l'image reçue, reconstruit avec l'auto-encodeur d'inpainting, et dans lequel l'auto-encodeur d'inpainting comprend au moins un premier réseau neuronal qui est entraîné sur la base d'un premier ensemble d'images d'entraînement, et le premier ensemble d'images d'entraînement comprend une pluralité d'images d'entraînement qui montrent chacune un produit sans défaut correspondant ;

    le procédé **caractérisée par** les étapes suivantes :

    - déterminer (106), au moyen d'un classificateur binaire, à l'aide d'un résultat de la détection d'anomalies, si ou non un défaut est présent, une anomalie étant considérée comme un défaut si elle peut avoir une influence négative sur une qualité du produit ;
    - effectuer une détection de défaut (108) sur l'image reçue au moyen d'un détecteur de défaut, le détecteur de défaut comprenant au moins un troisième réseau neuronal entraîné sur la base d'au moins un troisième ensemble d'images d'entraînement, et l'au moins un troisième ensemble d'images d'entraînement comprenant une pluralité d'images d'entraînement indiquant chacune un produit défectueux correspondant ;
    - évaluer (109) un résultat de l'analyse de l'image reçue sur la base d'une pondération des résultats de la détection d'anomalies, de la détection de défauts et du classificateur binaire, les pondérations respectives déterminant des probabilités qu'il s'agisse d'un défaut réel.

2. Procédé selon la revendication 1, dans lequel, pour effectuer la détection d'anomalies (105), l'image reçue est divisée en au moins deux sous-images, la détection d'anomalies est effectuée sur les sous-images individuelles et le classificateur binaire est appliqué aux résultats de la détection d'anomalies des sous-images individuelles.

3. Procédé selon l'une des revendications 1 ou 2, dans lequel, lors de la détection de défaut (108), en outre un emplacement d'un défaut détecté dans l'image reçue et/ou un type de défaut détecté et/ou une probabilité de défaut est déterminée.

4. Procédé selon l'une des revendications 1 à 3, dans lequel, lors de la détermination (106) de la présence ou non d'un défaut, au moyen du classificateur binaire, à l'aide d'un résultat de la détection d'anomalie, le classificateur binaire évalue, à l'aide d'une erreur de reconstruction d'une version de l'image reçue reconstruite au moyen de l'auto-encodeur de peinture, si le produit représenté dans l'image reçue doit être évalué comme défectueux ou sans défaut.

5. Procédé selon l'une quelconque des revendications 1 à 4, dans lequel le classificateur binaire comprend au moins un deuxième réseau neuronal entraîné sur la base d'un deuxième ensemble d'images d'entraînement, le deuxième ensemble d'images d'entraînement comprenant des résultats de l'auto-encodeur d'inpainting; et dans lequel en outre une carte d'attention du au moins un deuxième réseau neuronal est créée (107) lors de l'application du classificateur binaire, la carte d'attention représentant une observation des endroits de l'image reçue où l'au moins un deuxième réseau neuronal présente une activité plus élevée.

6. Procédé d'entraînement d'un système d'analyse d'un produit, le procédé comprenant les étapes consistant à :

   - créer (201) un premier ensemble d'images d'entraînement, le premier ensemble d'images d'entraînement comprenant une pluralité d'images d'entraînement, chacune montrant un produit sans défaut ;
   - entraîner (202) au moins un premier réseau neuronal d'un auto-encodeur d'inpainting sur la base du premier ensemble d'images d'entraînement ;
   - créer d'un classificateur binaire qui est conçu pour reconnaître, à l'aide d'un résultat d'une détection d'anomalie au moyen de l'auto-encodeur d'inpainting, s'il y a ou non un défaut, une différence entre une image reçue du produit et un pendant exempt d'anomalie reconstruit avec l'auto-encodeur d'inpainting pouvant être constatée au moyen de la détection d'anomalie par rapport à l'image reçue, et une anomalie étant évaluée comme un défaut si celle-ci peut influencer négativement une qualité du produit ;
   - créer (206) au moins un troisième ensemble d'images d'entraînement, ledit au moins un troisième ensemble d'images d'entraînement comprenant une pluralité d'images d'entraînement, chacune montrant un produit défectueux, et en outre dans lequel au moins un défaut est marqué dans chaque image d'entraînement du troisième ensemble d'images d'entraînement ;
   - entraîner (207) au moins un troisième réseau neuronal d'un détecteur de défauts sur la base du au moins un troisième ensemble d'images d'entraînement ;
   - détermination d'une pondération au moyen de laquelle les résultats d'une détection d'anomalies au moyen de l'auto-encodeur d'inpainting, d'une détection de défauts au moyen du détecteur de défauts et d'une application du classificateur binaire doivent être évalués.

7. Procédé d'entraînement selon la revendication 6, dans lequel la création du classificateur binaire comprend ce qui suit :

   - créer (203) un deuxième ensemble d'images d'entraînement, le deuxième ensemble d'images d'entraînement comprenant des résultats de l'auto-encodeur d'inpainting ;
   - entraîner (205) au moins un deuxième réseau neuronal du classificateur binaire sur la base du deuxième ensemble d'images d'entraînement.

8. Procédé d'entraînement selon l'une des revendications 6 ou 7, comprenant en outre l'étape consistant à :

   - créer (208) d'un troisième ensemble supplémentaire d'images d'entraînement, dans lequel ledit troisième ensemble supplémentaire d'images d'entraînement comprend à la fois une pluralité d'images d'entraînement indiquant chacune un produit défectueux et une pluralité d'images d'entraînement indiquant chacune un produit sans défaut, et dans lequel l'entraînement dudit au moins un troisième réseau neuronal est en outre effectué (209) sur la base dudit troisième ensemble supplémentaire d'images d'entraînement.

9. Procédé d'entraînement selon l'une quelconque des revendications 6 à 8, comprenant en outre l'étape consistant à :

   - créer (208) d'un troisième ensemble supplémentaire d'images d'entraînement, dans lequel le troisième ensemble supplémentaire d'images d'entraînement comprend une pluralité d'images d'entraînement, chacune montrant un produit sans défaut qui a été reconnu comme défectueux par le au moins un troisième réseau neuronal précédemment formé , et dans lequel l'entraînement du au moins un troisième réseau neuronal est effectué (209) en outre sur la base du troisième ensemble supplémentaire d'images d'entraînement.

10. Procédé d'entraînement selon l'une quelconque des revendications 6 à 9, dans lequel l'entraînement (202) d'au moins un premier réseau neuronal de l'auto-encodeur d'inpainting sur la base du premier ensemble d'images d'entraînement comprend en outre :

- reconstruire par patch une image d'entraînement du premier ensemble d'images d'entraînement ;
- ajouter, pour une pluralité de patchs reconstruits, une zone de bordure à partir d'une partie correspondante de l'image d'entraînement originale ; et
- entraîner le au moins un premier réseau neuronal de l'auto-encodeur d'inpainting au moyen des patchs reconstruits de l'image d'entraînement en tenant compte des zones de bordure ajoutées.

11. Procédé selon l'une quelconque des revendications 1 à 10, dans lequel le produit est un produit médical et dans lequel le produit médical comprend au moins l'un des éléments suivants :

- un médicament liquide,
- un médicament solide,
- un médicament liquide dans un emballage,
- un médicament solide dans un emballage,
- une ampoule pour médicament,
- un flacon pour médicaments,
- un emballage sous blister.

12. Dispositif (3) d'analyse d'un produit (6), ledit dispositif (3) étant adapté pour mettre en œuvre le procédé selon l'une des revendications 1 à 6 et/ou le procédé selon l'une des revendications 7 à 11.

13. Dispositif (3) selon la revendication 12, dans lequel le dispositif comprend en outre un dispositif de prise de vue (8) pour prendre l'image du produit (6) ; et/ou comprend en outre un dispositif de commande agencé pour provoquer un tri d'un produit (6) détecté comme défectueux.

14. Dispositif (3) selon l'une des revendications 12 ou 13, ledit dispositif (3) étant agencé pour être mis à niveau sur un dispositif d'inspection semi-automatique (1).

15. Système (1) d'analyse d'un produit (6) comprenant le dispositif (3) selon l'une des revendications 12 à 14 et un dispositif d'inspection (2).

16. Programme d'ordinateur comprenant des instructions qui, lorsque le programme d'ordinateur est exécuté par un ordinateur, amènent ce dernier à mettre en œuvre le procédé selon l'une quelconque des revendications 1 à 5 et/ou 6 à 11.

17. Support de stockage lisible par ordinateur comprenant le programme d'ordinateur selon la revendication 16.

Fig. 1

Fig. 2

Fig. 3

Fig. 4

# EP 4 123 506 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020364842 A1
- CN 108229561 A

**In der Beschreibung aufgeführte Nicht-Patentliteratur**

- **ZAVRTANIK VITJAN et al.** *Reconstruction by inpainting for visual anomaly detection*
- **VON JONATHAN PIRNAY et al.** *Inpainting Transformer for Anomaly Detection*